## Europäisches Patentamt
## European Patent Office
## Office européen des brevets

(19)

(11) Veröffentlichungsnummer: **0 152 560**
**B1**

(12) # EUROPÄISCHE PATENTSCHRIFT

(45) Veröffentlichungstag der Patentschrift:
01.07.87

(51) Int. Cl.⁴: **F 01 N 3/10, B 01 J 35/04**

(21) Anmeldenummer: **84114562.6**

(22) Anmeldetag: **30.11.84**

(54) **Matrix für einen katalytischen Reaktor zur Abgasreinigung.**

(30) Priorität: **24.12.83 DE 3347086**

(43) Veröffentlichungstag der Anmeldung:
**28.08.85 Patentblatt 85/35**

(45) Bekanntmachung des Hinweises auf die Patenterteilung:
**01.07.87 Patentblatt 87/27**

(84) Benannte Vertragsstaaten:
**BE DE FR GB IT SE**

(56) Entgegenhaltungen:
**DE-B-1 132 899**
**DE-B-2 733 640**
**US-A-4 162 993**
**US-A-4 350 617**

**PATENT ABSTRACTS OF JAPAN, Band 6, Nr. 231,
17. November 1982, Seite (C-135) (1109); & JP-A-57-
132551 (NIHON ENGERUHARUDO K.K.) 16-08-1982**

(73) Patentinhaber: **Süddeutsche Kühlerfabrik Julius Fr.
Behr GmbH & Co. KG., Mauserstrasse 3, D-7000
Stuttgart 30 (DE)**

(72) Erfinder: **Martin, Hans, Dipl.- Ing.,
Wartbergstrasse 27, D-7000 Stuttgart 1 (DE)**
Erfinder: **Scharpf, Kurt, Badstrasse 14, D-7251
Mönchsheim (DE)**

(74) Vertreter: **Wilhelm, Hans- Herbert, Dr.- Ing.,
Wilhelm & Dauster Patentanwälte
Hospitalstrasse 8, D-7000 Stuttgart 1 (DE)**

**EP 0 152 560 B1**

LIBER, STOCKHOLM 1987

## Beschreibung

Die Erfindung betrifft eine Matrix für einen katalytischen Reaktor zur Abgasreinigung, nach dem Oberbegriff des Patentanspruches 1.

Es ist eine Matrix bekannt (DE-A- 27 33 640), bei der jeweils ein aus einem Wellblechstreifen und zwei diesen beidseitig abschließenden glatten Blechbändern bestehender Streifen zu einer Matrix aufgewickelt ist. Um ein gegenseitiges Verrutschen der aufgewickelten Lagen zu vermeiden sind Erhebungen und/oder Vertiefungen in den aneinandergrenzenden Lagen vorgesehen, die formschlüssig ineinandergreifen. Nachteilig ist bei einer solchen Matrix, daß wegen der im wesentlichen in der Achsrichtung des Gehäuses verlaufenden Strömungskanäle ein radialer Ausgleich des Abgases bei der Durchströmung der Matrix nicht möglich ist, auch wenn, wie bei den bekannten Bauarten vorgesehen, wegen der gegenseitigen Fixierung der gewickelten Lagen Öffnungen in den gewellten und glatten Blechen vorgesehen sind. Der geringste Strömungswiderstand tritt innerhalb der axial verlaufenden Strömungskanäle auf, so daß der durch Turbulenzerscheinungen in benachbarte Strömungskanäle gelangende Abgasanteil gering ist. Das gilt auch für Bauarten, bei denen jeweils zwei gewellte und mit trapezförmigem Wellquerschnitt versehene Bänder untereinander aufgewickelt werden oder für Matrixbauarten (DE-A- 29 02 779), bei denen ebenfalls aufeinandergewickelte Metallbänder ähnlicher Art vorgesehen sind. Der fehlende radiale Ausgleich des Strömungsprofiles, das beim Eintritt in den Reaktor die bekannte, etwa parabelförmige Ausbildung hat, führt dazu, daß in dem Randbereich der Matrix keine oder eine nur unzureichende Reaktion stattfindet. Die Baulänge der Matrix muß daher verhältnismäßig groß gewählt werden.

Es ist auch eine Bauart der eingangs genannten Art (US-A- 41 62 993) bekannt, die aus einem Blechstreifen gewickelt wird, der mit jeweils nach einer Seite ausgeprägten tunnelförmigen Wellungen versehen ist. Diese Wellungen müssen dabei in der Längsrichtung des Streifens in ungleichen, sich nicht wiederholenden Abständen vorgesehen werden, damit sie beim anschließenden Wickeln nicht ineinanderrutschen, und sie sind jeweils gegenüber den in Strömungsrichtung nachfolgenden Ausprägungen durch glatte Bandbereiche getrennt. Bei einer aus einem solchen Streifen gewickelten Matrix werden daher die Strömungskanäle für das Abgas im wesentlichen durch die glatten Bandbereiche gebildet und die Ausprägungen dienen nur zur Abstandssicherung der aufeinandergewickelten Lagen. Ein gewisser Ausgleich des durchströmenden Gases in radialer Richtung ist denkbar; da die radial ausweichende Strömung aber einen größeren Strömungswiderstand überwinden muß, als er in der Strömungsrichtung vorliegt, wird der radiale Gasausgleich sehr gering bleiben. Ein solcher ist bei dieser bekannten Matrix auch nicht angestrebt gewesen.

Der Erfindung liegt die Aufgabe zugrunde, gezielt für einen bbesseren Ausgleich des Strömungsprofiles zu sorgen, um so eine bessere Ausnützung der Katalysatorflächen und damit eine kürzere Baulänge für die Matrix zu erreichen.

Die Erfindung besteht bei einer Matrix der eingangs genannten Art in den kennzeichnenden Merkmalen des Patentanspruches 1. Durch diese Ausgestaltung wird das durchströmende Abgas jeweils nach kurzen Strömungsabschnitten in den einzelnen Lagen zu einer Richtungsänderung gezwungen. Da die darüber- und darunterliegenden Lagen in gleicher Weise aufgebaut sind, wird die Richtungsänderung auch nach oben und unten bewirkt, so daß im Gegensatz zu bekannten Bauarten trotz der Verwendung von durchgehenden gewellten Blechen mit der für die Reaktion notwendigen großen Oberfläche bezüglich der Ausbildung des Strömungsprofils ein Vergleichmäßigungseffekt in der Art erreicht, wie er auch bei der wechselnden Hintereinanderschaltung von Gittern zum Zweck der Vergleichmäßigung einer Strömung bewirkt wird. Die erfindungsgemäße Ausgestaltung führt daher zu der erwünschten Turbulenzerhöhung auch in radialer Richtung innerhalb des durchströmten Gehäuses, damit zur Vergleichmäßigung des Strömungsprofiles und zur Beaufschlagung der Randzonen der Matrix, die damit an der Reaktion teilnehmen und auf diese Weise den Reaktionseffekt der Matrix vergrößern. Die Baulänge der erfindungsgemäßen Matrix braucht daher im Vergleich zu bekannten Bauarten nicht so groß ausgebildet zu werden.

Die in Strömungsrichtung gemessene Breite der Wellstreifen kann mindestens bei einigen der Wellstreifen unterschiedlich sein, und es ist sehr vorteilhaft, wenn die Wellstreifen Teile von sogenannten Turbulenzblechen sind, wie sie bei Wärmetauschern zwischen zwei von einem Wärmetauschmittel durchströmten Wänden vorgesehen sind. Solche Turbulenzbleche können durch Walzen o.dgl. hergestellt und mit den gewünschten Ausprägungen versehen werden.

Um solche Turbulenzbleche zur Erzielung des erfindungsgemäßen Effektes aufeinanderschichten zu können, ist es zweckmäßig, daß die Wellung der Wellstreifen so ausgebildet ist, daß jeweils der an ein "Tal" der benachbarten Lage angrenzende "Berg" einer Wellung größer als jenes ist. Das kann in sehr einfacher Weise dadurch erreicht werden, daß die Wellstreifen jeweils trapezförmigen Querschnitt ihrer Wellungen aufweisen und daß der jeweils schmalere Teil des Trapezquerschnittes den zur benachbarten Lage offenen "Tal"-Teil der Welle bildet. Bleche mit diesem negativen trapezförmigen Querschnitt lassen sich durch Walzen zunächst im allgemeinen nur mit rechteckigem Querschnitt herstellen. Der trapezförmige Querschnitt wird jedoch durch Stauchen der Bleche erreicht. Beim Wickeln solcher Bleche ergibt sich im allgemeinen wegen der unterschiedlichen Durchmesser, auf dem die einzelnen Lagen liegen, auch eine unterschiedliche Verformung, die aber, insbesondere bei der Verwendung von Profilen mit trapezförmigem Wellquerschnitt stets so erfolgt, daß mindestens ein Wellenberg auf dem ihm zugewandten Wellenberg der darunterliegenden Schicht aufliegt, so daß ein Ineinanderrutschen der gewickelten Schichten vermieden wird. Natürlich können die erfindungsgemäß verwendeten Well- oder Turbulenzbleche auch zu der Matrix aufeinandergeschichtet werden. Die so gebildete Matrix kann in an sich bekannter Weise anschließend verlötet oder verschweißt und dann beschichtet werden.

Um das Ineinanderrutschen der einzelnen Lagen zu vermeiden, ist es außerdem aber auch möglich, aneinandergrenzende Lagen in ihrer Ausrichtung zur Durchströmungsrichtung im Winkel zu versetzen, so daß die Richtung der Strömungskanalteilstücke zweier benachbarter Lagen voneinander abweicht. Dadurch kann zum einen, wie bereits erwähnt, das Ineinanderrutschen zweier benachbarter Lagen sicher vermieden werden, zum anderen ist diese Maßnahme ein weiteres Mittel zur Erhöhung der Turbulenz, die ebenfalls zu einem verbesserten Ausgleich des Strömungsprofils führt. Die Strömungskanalteilstücke jeder Lage können dabei um einen spitzen Winkel zur Anströmrichtung angestellt angeordnet sein. Die Ausrichtung zu den Strömungskanalteilstücken der benachbarten Lage kann bezüglich der Anströmrichtung der Matrix entgegengesetzt sein. Blechstreifen mit solchen versetzt zu ihren Vorder- und Rückkanten, die später quer zur Anströmung liegen, verlaufenden Strömungskanalteilstücken können dadurch hergestellt werden, daß entsprechende Bleche schräg gewalzt oder geprägt werden.

Die Erfindung ist in der Zeichnung anhand von Ausführungsbeispielen dargestellt und in der nachfolgenden Beschreibung erläutert. Es zeigen:

Fig. 1 die schematische Darstellung eines Längsschnittes durch einen zylindrischen Reaktor gemäß der Erfindung, die den prinzipiellen Verlauf der Strömung in Achsrichtung des Reaktors zeigt,

Fig. 2 eine schematische und perspektivische Darstellung der Aufteilung der Strömungskanäle in einer Lage des Reaktors der Fig. 1,

Fig. 3a und 3b die schematische Darstellung eines Schnittes durch den Reaktor der Fig. 1 längs der Linie II-II bei einem aus geschichteten Blechen hergestellten Reaktor (Fig. 3a) bzw. bei einem aus gewickelten Blechen hergestellten Reaktor (Fig. 3b),

Fig. 4 eine perspektivische Detaildarstellung zweier erfindungsgemäß ausgebildeter und übereinanderliegender Lagen von Metallblechen,

Fig. 5 die perspektivische Teildarstellung einer aus den erfindungsgemäßen Metallblechen gewickelten Matrix und

Fig. 6 die schematische Darstellung von zwei erfindungsgemäß ausgebildeten und aufeinandergeschichteten Blechlagen, deren Strömungskanalteilstücke jedoch unter einem Winkel zur Anströmrichtung versetzt angeordnet sind.

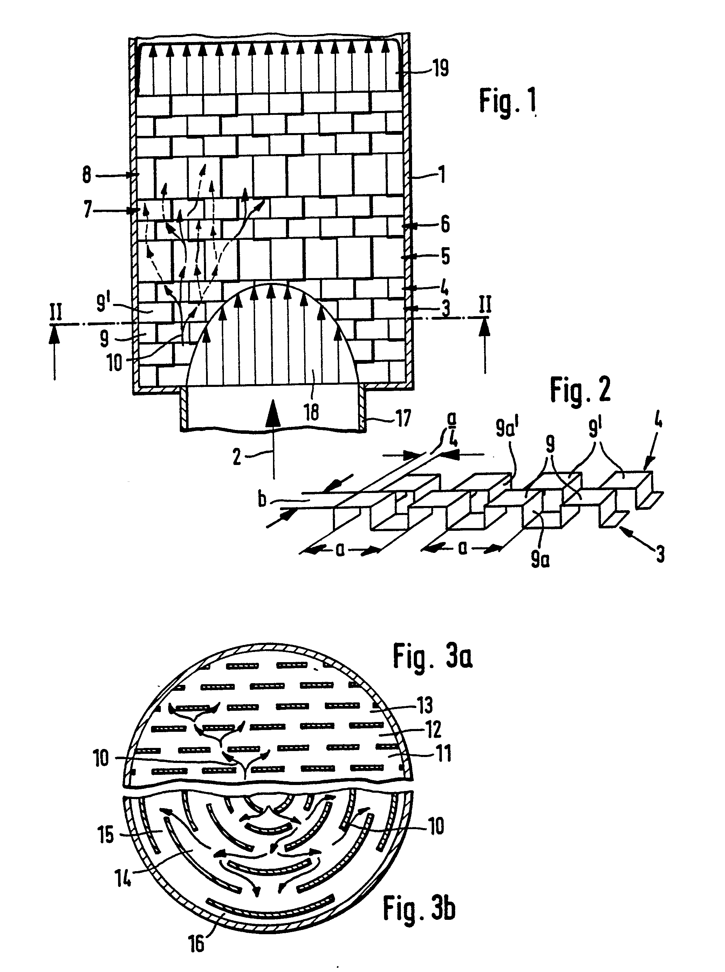

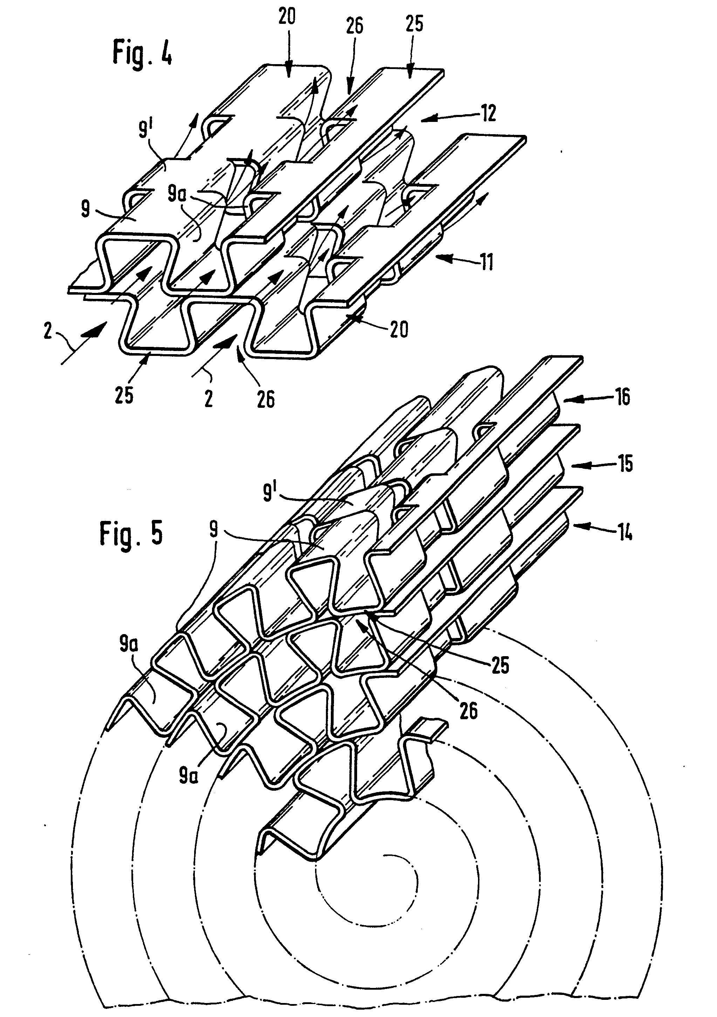

In den Fig. 1, 2, 3a und 3b ist schematisch der prinzipielle Aufbau einer erfindungsgemäßen Matrix gezeigt. Aus Fig. 1 ist erkennbar, daß jeweils eine Lage der innerhalb von Wänden 1 eines Gehäuses, das im Ausführungsbeispiel zylindrisch ist, keine durchgehenden Strömungskanäle wie beim Stand der Technik gebildet sind, sondern daß die Strömungskanäle aus einer Vielzahl von in der Strömungsrichtung 2 hintereinander angeordneten, quer zur Strömungsrichtung verlaufenden Wellstreifen 3, 4, 5, 6, 7, 8 usw. besteht, von denen die Wellstreifen 3, 4, 6, 7 jeweils gleich ausgebildet sind, während die Wellstreifen 5 und 8 in der Strömungsrichtung 2 eine größere Breite aufweisen. Alle Wellstreifen 3 bis 8 sind in einer Lage jeweils gleich lang, aber, wie aus Fig. 1 erkennbar ist, jeweils um ein Viertel der Wellenlänge a quer zur Strömungsrichtung 2 gegeneinander versetzt. Dadurch ergeben sich, wie aus den Fig. 1 und 2 deutlich wird, jeweils Strömungskanalteilstücke 9, 9' gleicher Länge in Strömungsrichtung, die aber so gegeneinander versetzt sind, daß ihre jeweils senkrecht verlaufenden Wände 9a, 9a' jeweils in der Mitte des vorhergehenden bzw. des folgenden Strömungskanalteilstückes stehen. Da diese Wände wiederum mit ihrem zugeordneten Boden Teilkanalstücke bilden, die nach oben offen sind, während die ersten Teilkanalstücke nach unten offen sind, findet eine Verbindung der Strömungskanalteilstücke 9, 9' nicht nur in Strömungsrichtung 2, sondern auch, wie anhand der Fig. 3a, 3b deutlich wird, senkrecht zur Strömungsrichtung und damit beim Ausführungsbeispiel in radialer Richtung statt. Anhand der in Fig. 1 bzw. 3a, 3b eingezeichneten Strömungspfeile 10 wird klar, daß die aus einem der Strömungskanalteilstücke 9, 9' kommende Strömung sich jeweils wieder in zwei Teilströme zu dem axial dahinter liegenden Wellstreifen aufteilt, sie kann sich aber auch, da der Strömungswiderstand der gleiche ist, in Teilströme auflösen, die in die darüber- oder daruntergehende Lage 11, 12 oder 13 verlaufen bzw. bei einer gewickelten Matrix in die radial benachbarten Schichten 14, 15 oder 16. Die Fig. 3a deutet dabei an, daß die einzelnen Lagen 11, 12, 13, die jeweils in der in den Fig. 1 und 2 angedeuteten Weise aufgebaut sind, aufeinandergeschichtet werden können. Fig. 3b zeigt, daß Bleche mit der in den Fig. 1 und 2 angedeuteten Grundstruktur auch zu einer Matrix gewickelt werden können. Dies wird auch anhand der Fig. 4 und 5 noch deutlich werden.

Diese erfindungsgemäß aufgebaute Matrix weist eine Form auf, die in besonders einfacher Weise einen radialen Ausgleich für die in Richtung des Pfeiles 2 eintretende Strömung erlaubt. Das durch einen Eintrittsstutzen 17 zugeführte Abgas weist daher das schematisch angedeutete Eintrittsprofil 18 auf, das aber durch die Ausbildung der Matrix sich bis zum Austritt aus dem Gehäuse 1 zu dem vergleichmäßigten Strömungsprofil 19 ausgebildet hat. Dieser Ausgleich tritt verhältnismäßig schnell ein, so daß auch die bei Reaktoren bekannter Bauarten normalerweise nicht an der Reaktion teilnehmenden Randbereiche an den Wandungen 1 durch die neue Ausbildung mit in den Umwandlungsprozeß eingeschaltet sind. Die Matrix und der Reaktor können daher in Strömungsrichtung 2 kürzer ausgebildet werden.

Die Fig. 4 zeigt die besonders vorteilhafte Möglichkeit, Strömungskanäle, wie sie anhand der Fig. 1 und 2 schematisch gezeigt sind, jeweils aus einem einzigen durchgehenden Blechstreifen 20 zu bilden, der jeweils für sich die einzelnen Lagen 11, 12, 13 bzw. 14, 15, 16 bilden kann, wie das anhand von Fig. 4 und 5 gezeigt ist. Die einzelnen Metallblechstreifen 20 der Fig. 4 (bzw. Fig. 5) lassen sich in an sich bekannter Weise dadurch herstellen, daß ein glattes Blech durch ein mit entsprechenden Vorsprüngen und Aussparungen versehenes Walzenpaar hindurchgeführt wird, so daß die in Fig. 4 gezeigte Grundform, allerdings mit senkrechten Wänden gemäß Fig. 2 erreicht wird. Durch Stauchen kann das trapezförmige Querschnittsprofil der Streifen 20 erzielt werden, welches den Vorteil aufweist, daß die jeweils zur benachbarten Seite hin offenen Tal-Teile 26 der Strömungskanalteilstücke 9, 9' quer zur Strömungsrichtung 2 jeweils schmäler sind, als die geschlossenen und der benachbarten Lage 11 bzw. 12 zugewandten Berg-Teile 25 der Strömungskanalteilstücke 9 bzw. 9'. Die Streifen 20 lassen sich dadurch einwandfrei aufeinanderschichten, wie in Fig. 4 gezeigt ist, ohne daß die Gefahr besteht, daß die Streifen sich ineinanderdrücken. Gleiches tritt auf, wenn ein einziger Streifen oder auch zwei Streifen gemeinsam gemäß Fig. 5 spiralförmig zu einer zylindrischen Matrix aufgewickelt werden.

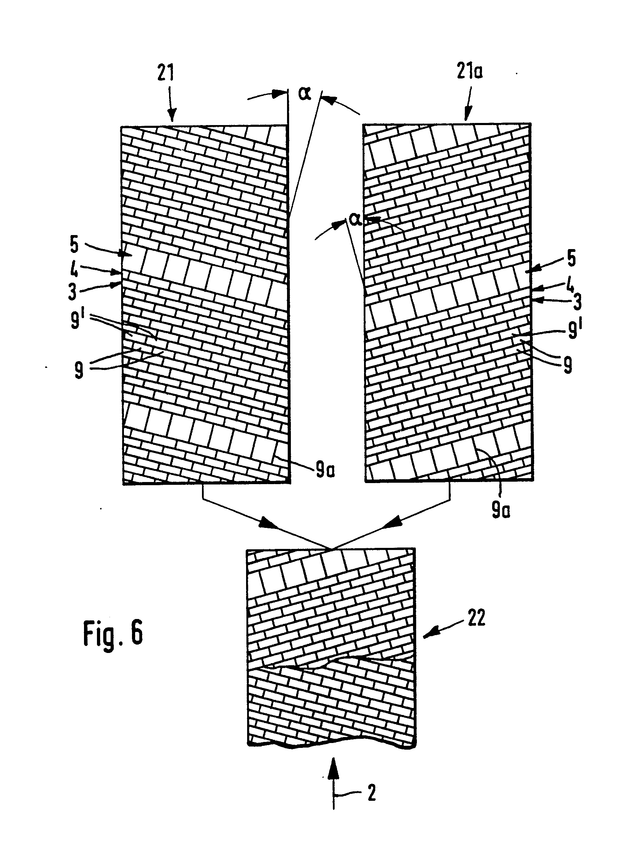

Fig. 6 zeigt zwei Metallblechstreifen 21 und 21a, die im Prinzip ähnlich ausgebildet sind, wie die Streifen 20 der Fig. 4, wobei jedoch, wie in Fig. 1 angedeutet, jeweils Wellstreifen 3, 4 mit Wellstreifen 5 größerer axialer Länge abwechseln. Unterschiedlich ist, daß die Streifen 21, 21a unter dem Winkel α schräg zu der Richtung der Wände 9a der Strömungskanalteilstücke 9, 9' ausgeschnitten sind, und zwar jeweils bezogen auf die Strömungsrichtung 2 unter entgegengesetzten Winkeln α. Der Winkel α kann beispielsweise 5° betragen. Die so gebildeten Metallstreifen 21, 21a können nun, wie in den Fig. 3a und 4 gezeigt, aufeinandergeschichtet werden, so daß sich der in der Fig. 6 unten gezeigte Aufbau einer Doppelschicht 22 ergibt. Mehrere solcher Doppelschichten werden dann zur Matrix übereinandergeschichtet oder, wie anhand von Fig. 3b und 5 gezeigt, auch übereinandergewickelt. Bei einem solchen Aufbau einer Matrix kommt es nicht darauf an, die in den Fig. 4 und 5 gezeigte trapezförmige Querschnittsform der Wellungen zu erreichen, um ein Ineinanderrutschen zweier benachbarter Blechstreifen zu verhindern. Die Streifen 21 und 21a könnten auch aus Wellstreifen 3, 4, 5 mit nahezu beliebiger Wellenform, beispielsweise mit der in der Fig. 2 gezeigten Wellenform, aber auch mit etwa sinusförmiger Wellenform bestehen. Durch die Schräglage der einzelnen Strömungskanalteilstücke 9, 9' benachbarter Lagen zueinander wird ein Ineinanderrutschen von zwei benachbarten Lagen sicher verhindert.

In der Fig. 2 sind die Wellstreifen 3, 4 jeweils gleich ausgebildet und um ein Viertel ihrer Wellenlänge a zueinander quer versetzt. Sie könnten auch nur um einen anderen Bruchteil, z. B. a/3, a/5, a/6 o.dgl. zueinander versetzt sein. Übereinander geschichtete Wellstreifen, insbesondere wenn sie Teil von Turbulenzblechen der in Fig. 4 gezeigten Art sind, können nicht nur quer um Bruchteile der Wellenlänge versetzt zueinander sein, sondern auch um Bruchteile der Breite b - Fig. 2 - der Wellstreifen versetzt zueinander in der Durchströmungsrichtung 2. Diese Ausführung hätte sogar den Vorteil, daß ein Ineinanderrutschen übereinanderliegender Bleche vermieden wird, auch wenn diese nicht mit den negativ-trapezförmigen Querschnitten der Wellteilstücke versehen sind, die in Fig. 4 und 5 gezeigt sind.

**Patentansprüche**

1. Matrix für einen katalytischen Reaktor zur Abgasreinigung, insbesondere bei Brennkraftmaschinen, bestehend aus in mehreren Lagen mit ihren Ober- und Unterseiten aneinanderliegenden Metallblechstreifen mit einer mit Katalysatormaterial beschichtbaren Oberfläche, die mit Ausprägungen in der Form von Wellungen versehen und in einem vom Abgas durchströmten Gehäuse so angeordnet werden, daß die Wellungen Strömungskanäle bilden, die in Strömungsrichtung hintereinander, aber quer dazu gegeneinander versetzt angeordnet sind, dadurch gekennzeichnet, daß die Strömungskanäle von abwechselnd mit Wellenbergen (25) und Wellentälern (26) versehen, an ihren quer zur Strömungsrichtung (2) verlaufenden Vorder- und Rückkanten unmittelbar aneinanderhängenden Wellstreifen (3 bis 8) gebildet sind, die gegeneinander jeweils um einen Bruchteil ihrer Wellenlänge (a) versetzt sind und einen zusammenhängenden Blechstreifen (20) bilden.

2. Matrix nach Anspruch 1, dadurch gekennzeichnet, daß ein Teil der Wellstreifen (3, 4) untereinander gleich gestaltet, ein anderer Teil (5, 8) jedoch zwar mit gleicher Wellenlänge, aber mit einer in Strömungsrichtung (2) verlaufenden größeren Länge der Strömungskanalteilstücke (9, 9') versehen ist.

3. Matrix nach einem der Ansprüche 1 oder 2, dadurch gekennzeichnet, daß die Wellung der Wellstreifen (3 bis 8) so ausgebildet ist, daß jeweils der an ein Tal (26) der benachbarten Lage (11, 12) angrenzende Berg (25) einer Wellung größer als jenes ist.

4. Matrix nach Anspruch 3, dadurch gekennzeichnet, daß die Wellstreifen (20) jeweils trapezförmigen Querschnitt ihrer Wellungen aufweisen und daß der jeweils schmalere Teil des Trapezquerschnitts den zur benachbarten Lage (11, 12) offenen Talteil der Welle bildet.

5. Matrix nach einem der Ansprüche 1 bis 4, dadurch gekennzeichnet, daß die Blechstreifen (20) gewickelt sind.

6. Matrix nach einem der Ansprüche 1 bis 4, dadurch gekennzeichnet, daß die Blechstreifen (20) übereinander in verschiedenen Lagen (11, 12, 13) geschichtet sind.

7. Matrix nach einem der Ansprüche 1 bis 6, dadurch gekennzeichnet, daß die in den Wellstreifen (3 bis 8) gebildeten Strömungskanal-Teilstücke (9, 9') unter einem Winkel (α) zu jenen der benachbarten Lage und zur Anströmrichtung (2) ausgerichtet sind.

8. Matrix nach Anspruch 7, dadurch gekennzeichnet, daß die Strömungskanalteilstücke (9, 9') unter einem spitzen Winkel (α) zur Anströmrichtung (2) und entgegengesetzt zu jenen der benachbarten Lage (21, 21a) ausgerichtet sind.

**Claims**

1. A matrix for a catalytic reactor for exhaust gas cleaning, in particular in internal combustion engines, comprising sheet metal strips with a surface which can be coated with catalyst material, which strips bear against each other with their top and bottom sides in a plurality of layers and are provided with stamped-out portions in the form of corrugations and which are so arranged in a casing through which the exhaust gas flows that the corrugations form flow passages which are arranged in succession in the direction of flow but displaced relative to each other transversely with respect thereto, characterised in that the flow passages are formed by corrugated strips (3 to 8) which are alternately provided with corrugation crests (25) and troughs (26) and which are directly joined together at their front and rear edges extending transversely with respect to the direction of flow (2), the corrugated strips (3 to 8) being respectively displaced relative to each other by a fraction of their corrugation length (a) and forming a coherent sheet strip (20).

2. A matrix according to claim 1 characterised in that one part of the corrugated strips (3, 4) is of the same configuration as each other, but another part (5, 8), although having the same corrugation length, has a greater length, extending in the direction of flow (2), in respect of the flow passage portions (9, 9').

3. A matrix according to one of claims 1 and 2 characterised in that the corrugation configuration of the corrugated strips (3 to 8) is such that the respective crest (25) of a corrugation, adjoining a trough (26) of the adjacent layer (11, 12), is larger than said trough.

4. A matrix according to claim 3 characterised in that the corrugations of the corrugated strips (20) are respectively of trapezoidal cross-section and that the respectively narrower part of the trapezoidal cross-section forms the trough part, which is open to the adjacent layer (11, 12), of the corrugation.

5. A matrix according to one of claims 1 to 3 characterised in that the sheet strips (20) are coiled.

6. A matrix according to one of claims 1 to 4 characterised in that the sheet strips (20) are arranged stacked one above the other in different layers (11, 12, 13).

7. A matrix according to one of claims 1 to 6 characterised in that the flow passage portions (9, 9') which are formed in the corrugated strips (3 to 8) are disposed at an angle (α) with respect to those of the adjacent layer and with respect to the feed flow direction (2).

8. A matrix according to claim 7 characterised in that the flow passage portions (9, 9') are disposed at an acute angle (α) with respect to the feed flow direction (2) and opposite to those of the adjacent layer (21, 21a).

**Revendications**

1. Matrice de réacteur catalytique pour épuration des gaz d'échappement, en particulier de moteurs à combustion interne, constituée par des bandes de tôle métallique avec une surface garnie de catalyseurs, superposées en plusieurs couches par leurs faces supérieure et inférieure, présentant des empreintes sous forme d'ondulations et disposées dans un corps balayé par les gaz d'échappement de façon que les ondulations forment des canaux d'écoulement qui se succèdent suivant la direction d'écoulement mais sont décalées perpendiculairement à cette dernière, ladite matrice étant caractérisée en ce que les canaux d'écoulement sont formés par des bandes ondulées (3 à 8) présentant alternativement des sommets (25) et des creux (26), dont les bords avant et arrière perpendiculaires à la direction d'écoulement (2) se juxtaposent directement, et qui sont décalées d'une fraction de leur longueur d'onde (a) et forment ainsi une tôle continue (20).

2. Matrice selon revendication 1, caractérisée en ce qu'une partie des bandes ondulées (3, 4) est identique et qu'une autre partie (5, 8) présente certes la même longueur d'onde, mais une longueur des tronçons de canal (9, 9') supérieure suivant la direction d'écoulement (2).

3. Matrice selon une des revendications 1 ou 2, caractérisée en ce que l'ondulation des tôles ondulées (3 à 8) est réalisée de façon qu'un sommet (25) d'une ondulation adjacent à un creux (26) de la couche voisine (11, 12) est plus grand que ce dernier.

4. Matrice selon revendication 3, caractérisée en ce que les bandes ondulées (20) présentent chacune des ondulations de section trapézoïdale et que la partie étroite de la section trapézoïdale constitue le creux de l'onde ouvert en regard de la couche voisine (11, 12).

5. Matrice selon une quelconque des revendications 1 à 4, caractérisée en ce que les bandes de tôle (20) sont enroulées.

6. Matrice selon une quelconque des revendications 1 à 4, caractérisée en ce que les bandes de tôle (20) sont superposées en différentes couches (11, 12, 13).

7. Matrice selon une quelconque des revendications 1 à 6, caractérisée en ce que les tronçons de canal d'écoulement (9, 9') formés dans les bandes ondulées (3 à 8) sont orientés suivant un angle ($\alpha$) par rapport à ceux de la couche voisine et à la direction d'incidence (2).

8. Matrice selon revendication 7, caractérisée en ce que les tronçons de canal d'écoulement (9, 9') sont orientés suivant un angle aigu ($\alpha$) par rapport à la direction d'incidence (2) et de sens opposé à celui des tronçons de la couche voisine (21, 21a).

Fig. 1

Fig. 2

Fig. 3a

Fig. 3b

Fig. 4

Fig. 5

Fig. 6